(19) Europäisches Patentamt
European Patent Office
Office européen des brevets

(11) Publication number: **0 385 443 A2**

(12) # EUROPEAN PATENT APPLICATION

(21) Application number: 90103910.7

(22) Date of filing: 28.02.90

(51) Int. Cl.5: C08F 259/08, C08L 27/12, C08L 33/00, //(C08F259/08, 220:00)

(30) Priority: 28.02.89 JP 49127/89
28.02.89 JP 49128/89
28.02.89 JP 49129/89
28.02.89 JP 49130/89
28.02.89 JP 49131/89
28.02.89 JP 49132/89
28.02.89 JP 49133/89

(43) Date of publication of application: 05.09.90 Bulletin 90/36

(84) Designated Contracting States: DE FR GB IT

(71) Applicant: DAIKIN INDUSTRIES, LIMITED
Umeda Center Building 4-12 Nakazaki-nishi
2-chome Kita-ku
Osaka 530(JP)

(72) Inventor: Yagi, Toshiharu, c/o Dakin Idustries, Ltd.
1-1, Nishi Hitotsuya
Settsu-shi, Osaka-fu(JP)
Inventor: Noguchi, Tsuyoshi, c/o Dakin Idustries, Ltd.
1-1, Nishi Hitotsuya
Settsu-shi, Osaka-fu(JP)
Inventor: Tsuda, Nobuhiko, c/o Dakin Idustries, Ltd.
1-1, Nishi Hitotsuya
Settsu-shi, Osaka-fu(JP)
Inventor: Sakaguchi, Kohsaku, c/o Dakin Idustries, Ltd.
1-1, Nishi Hitotsuya
Settsu-shi, Osaka-fu(JP)
Inventor: Tanaka, Yoshito, c/o Dakin Idustries, Ltd.
1-1, Nishi Hitotsuya
Settsu-shi, Osaka-fu(JP)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
D-8000 München 40(DE)

(54) **Polymer material having shape memory characteristics.**

(57) The present invention provides a polymer material having shape memory characteristics and characterized in that the material is prepared from a polymer substance obtained by dissolving an amorphous fluorine-containing polymer in an acrylic monomer, and polymerizing the monomer with or without permitting the resulting polymer to form an interpenetrating polymer network, and a polymer material having shape memory characteristics and characterized in that the material is prepared from a blend of (a) and (b), (a) being an amorphous fluorine-containing polymer or crystalline polymer containing vinylidene fluoride, and (b) being an acrylic polymer.

EP 0 385 443 A2

# Polymer material having shape memory characteristics

The present invention relates to polymer materials having shape memory characteristics.

It is likely that articles or bodies of polymer compounds as shaped are difficult to install, assemble or transport. In such a case, it is useful to temporarily deform the body so as to make it easy to handle and cause the body to restore its specified shape as by heating after it has been installed or assembled, for the body to perform the contemplated function. Further like material is used chiefly for the purpose of causing molded bodies thereof to restore themselves to the original state from a deformed state. Various investigations have heretofore been made of materials suited to such uses, i.e., molded bodies having shape memory characteristics.

Molded shape memory bodies heretofore known include, for example, those of norbornene polymers (JP-A-59-53528), those of copolymers of a conjugated diene, epoxy-containing compound or the like and an aromatic vinyl, unsaturated nitrile or acrylic acid ester or the like (JP-A-60-28433), and crosslinked molded bodies prepared with use of polycaprolactone (JP-A-59-11315).

Also known are crosslinked molded bodies of a composition consisting primarily of a crystalline diene polymer having a melting point of 40 to 100 °C (JP-A- 62-192440), and blended polymers of styrenebutadiene block copolymer and transpolyisoprene or the like (JP-A-63-179955).

However, these molded bodies are not satisfactory in processability, have low transparency, or require much time or a high temperature to restore the original shape. Thus, they have advantages and disadvantages.

The main object of the present invention is to provide a shape memory polymer material which is excellent in processability, transparency, resistance to heat, weather, chemicals, oils, solvents and water, water and oil repellency, abrasion resistance, nonflammability, etc. and which has overcome the drawbacks of the prior art in shape memory characteristics so as to restore the original shape to a high ratio within a short period of time when heated.

The above and other objects of the invention will become apparent from the following description.

The present invention provides a polymer material having shape memory characteristics and characterized in that the material is prepared from a polymer substance obtained by dissolving an amorphous fluorine-containing polymer in an acrylic monomer, and polymerizing the monomer with or without permitting the resulting polymer to form an interpenetrating polymer network.

The present invention further provides a polymer material having shape memory characteristics and characterized in that the material is prepared from a blend of (a) and (b), (a) being an amorphous fluorine-containing polymer or crystalline polymer containing vinylidene fluoride, and (b) being an acrylic polymer.

The material of the present invention is molded in a shape required for actual use and thereafter deformed at a specified temperature. When the molded body is heated again at the specified temperature, the deformation is automatically eliminated, permitting the body to restore the initial shape or a shape similar thereto. The material is therefore usable for various applications in which such a function is required.

The amorphous fluorine-containing polymers to be used in the present invention are, for example, copolymers containing vinylidene fluoride, fluoroalkene/olefin copolymers, fluoro(alkyl vinyl ether)(including those having multiple ether bonds)/olefin copolymers, fluorosilicon elastomers and fluorophosphazene elastomers. Among some of these polymers, those having an iodine atom or bromine atom bonded to the polymer chain thereof (see, for example, JP-A-53-125491 and JP-A-59-20310, and JP-B-53-4115) are highly amenable to polymerization reaction and are therefore desirable.

In the present invention, the above amorphous copolymer containing vinylidene fluoride is preferably 500 to a million in number average molecular weight and is obtained by copolymerizing vinylidene fluoride with at least one other copolymerizable monomer. Examples of other monomers are tetrafluoroethylene, chlorotrifluoroethylene, trifluoroethylene, vinyl fluoride, hexafluoropropylene, pentafluoropropylene, hexafluoroisobutene, perfluorocyclobutene, perfluoro(methylcyclopropylene), perfuluoroallene, $\alpha,\beta,\beta$-trifluorostyrene, perfluorostyrene, polyfluoroalkyl vinyl ethers [e.g., perfluoro(methyl vinyl ether), perfluoro(propyl vinyl ether)], polyfluoroacrylic acid or ester thereof, polyfluorovinyl acetic acid or ester thereof, polyfluorovinyl ether sulfonic acid, polyfluorodienes, ethylene, propylene, acrylic acid or ester thereof and vinyl acetic acid or ester thereof. The content of the monomer is not particularly limited but is preferably 10 to 60 wt%. Among some of these polymers, those having an iodine atom or bromine atom bonded to the polymer chain thereof (see, for example, JP-A-53-125491 and JP-A-59-20310, and JP-B-53-4115) are highly amenable to polymerization reaction and are therefore desirable. Further, these copolymers containing vinylidene fluoride may be those crosslinked by a usual manner.

Fluoroalkene/olefin copolymers used in the present invention include a copolymer of tetrafluoroethylene

and propylene, and copolymers of the above two components and other copolymerizable monomer. Examples of useful other copolymerizable monomers are vinylidene fluoride, perfluoro(alkyl vinyl ether)[e.g., perfluoro(methyl vinyl ether), perfluoro(propyl vinyl ether)], ethylene, isobutene, 2-chloroethyl vinyl ether, acrylic acid glycidyl vinyl ether and vinyl acetic acid.

Fluoro(alkyl vinyl ether)/olefin copolymers include ethylene/perfluoro(methyl vinyl ether) copolymer, ethylene/perfluoro(propyl vinyl ether) copolymer and ethylene/perfluoro(polyether vinyl ether) copolymer.

Examples of fluorosilicon elastomers are a copolymer of methyltrifluoropropylsiloxane and vinylmethylsiloxane, and examples of fluorophosphazene elastomers are a reaction product of a long-chain elastomer with trifluoroethanol, pentafluoropropanol or heptafluorobutanol, the elastomer being obtained by thermal degradation of dichlorophosphonitrile trimer.

Acrylic monomers useful for the present invention are not limited in kind and include mono- and polyfunctional monomers. The monomer is used singly or in a mixture of at least two of them. The polyfunctional monomer is preferably used in a small amount, conjointly with the monofunctional monomer. Examples of preferred monomers are methyl methacrylate (MMA), ethyl methacrylate (EMA), butyl methacrylate (BMA), 2-hydroxyethyl methacrylate (HEMA), 3-(trimethoxysilyl)propyl methacrylate (MSPM), 2-(phenylphosphoryl)ethyl methacrylate (phenyl-P), 2-hydroxy-3-($\beta$-napthoxy)propyl methacrylate (HNPM), N-phenyl-N-(2-hydroxy-3-methacryloxy)propylglycine (NPG-GMA), ethylene glycol dimethacrylate (EDMA or 1G), diethylene glycol dimethacrylate (DiEDMA or 2G), triethylene glycol dimethacrylate (TriEDMA or 3G), 1,4-butanediol dimethacrylate (1,4-BuDMA), 1,3-butanediol dimethacrylate (1,3-BuDMA), neopentyl glycol dimethacrylate, 1,6-hexanediol dimethacrylate, 2,2-bis[4-(2-hydroxy-3-methacryloxypropoxy)phenyl]propane (Bis-GMA), 2,2-bis(4-methacryloxyphenyl)propane (BPDMA), 2,2-bis(4-methacryloxyethoxyphenyl)propane (Bis-MEPP), 2,2-bis(4-methacryloxypolyethoxyphenyl)propane (Bis-MPEPP), di(methacryloxyethyl)-trimethylhexamethylenediurethane (UDMA), trimethylolpropanetrimethacrylate (TMPT), glycidyl methacrylate,

$CH_2=C(CH_3)COOCH_2CF_3$ (3FMA),
$CH_2=C(CH_3)COOCH_2CF_2CF_2H$ (4FMA),
$CH_2=C(CH_3)COOCH_2CF_2CF_3$ (5FMA),
$CH_2=C(CH_3)COOCH_2(CF_2)_2CF_3$ (7FMA),
$CH_2=C(CH_3)COOCH_2(CF_2)_3CF_2H$ (8FMA),
acrylates and $\alpha$-fluoroacrylates corresponding to such compounds.

Examples of $\alpha$-fluoroacrylates are
$CH_2=CFCOOCH_2CF_2CF_2H$ (4FFA),
$CH_2=CFCOOCH_2CF_2CF_3$ (5FFA),
$CH_2=CFCOOCH_2(CF_2)_3CF_2H$ (8FFA) and
$CH_2=CFCOOCH_2(CF_2)_5CF_2H$ (12FFA).

According to the invention, the fluorine-containing polymer is dissolved in such an acrylic monomer, and the solution is then subjected to polymerization, whereby the polymer substance is prepared. The polymerization is conducted in the presence of a polymerization initiator. A polymerization inhibitor, reducing agent, transfer agent, etc. can be added to the polymerization system. Examples of useful polymerization initiators are light, heat, benzoyl peroxide, azoisobutyronitrile (AIBN), camphorquinone (CQ), 9-fluorenone, tributylborane (TBB), benzophenone and the like. Examples of useful reducing agents are dimethylaminoethyl methacrylate (DMAEMA), dimethyl-p-toluidine (DMPT) and the like. Examples of useful polymerization inhibitors are hydroquinone, hydroquinone methyl ester and the like. Examples of useful transfer agents include lauryl mercaptan.

When heat polymerization is resorted to, it is desirable to heat the solution at a temperature of about 40 to about 100 °C for abourt 10 to about 150 minutes. When to be subjected to photopolymerization, the solution is preferably irradiated with visible ray or ultraviolet ray for several minutes to tens of minutes.

The substances of the present invention include those obtained by forming such a polymer substance into an IPN (interpenetrating polymer network). IPN is a polymer obtained by mixing two linear polymers together each in the form of a liquid (or solution) and crosslinking one or both of the polymers to interlock the respective molecular chains. This method is utilized in the present invention as modified into several different methods. According to a first method, a polymer substance is first made into a film, a monomer serving as a guest polymer is injected in the state of vapor phase into the film, or the film is immersed in a solution of the monomer to inject the monomer into the film, and the film is thereafter polymerized or crosslinked as by heating or irradiation with light. A second method, like the usual IPN forming method, comprises dissolving a polymer substance in a suitable solvent, admixing a guest component with the solution for reaction, casting the resulting solution into a film, and heat-treating the film when so required. Other methods are also usable.

For the formation of IPN, crosslinking must be effected. This can be accomplished, for example, by using as the fluorine-containing polymer such a compound having an iodine atom or bromine atom bonded to the polymer chain thereof, or by using as the acrylic monomer at least bifunctional monomer, or by using a crosslinking agent.

For this purpose, the fluorine-contaning polymers and acrylic monomers already exemplified are usable. Useful crosslinking agents include, for example, triallyl isocyanurate, triallyl cyanurate, triacryl formal, triallyl trimellitate, diallyl phthalate and like poly-unsaturated compounds. Further, an organic peroxide is also usable as a radical source.

The polymer material having shape memory characteristics defined in claim 2 of the present invention is described below. The same amorphous fluorine-containing polymer as above is usable. Examples of crystalline polymer containing vinylidene fluoride are a homopolymer and copolymers of vinylidene fluoride. Copolymerizable monomers include tetrafluoroethylene, trifluoroethylene, chlorotrifluoroethylene and trichlorofluoroethylene.

Acrylic polymers include a homopolymer of acrylic monomer and copolymers of acrylic monomer and other monomer. The same acrylic monomer as above is usable. Examples of other monomers are vinyl acetate, styrene, acrylonitrile, butadiene and 2-chloroethyl vinyl ether.

As the above fluorine-containing polymer and acrylic polymer are usable those obtained by a usual method.

The polymer substance for use in the present invention is excellent in processability, transparency, resistance to heat, weather, chemicals, oils, solvents and water, water and oil repellency, abrasion resistance and nonflammability and has outstanding shape memory characteristics.

The polymer substance is molded in a disired shape, for exmaple, by extrusion, injection molding or compression molding, or is dissolved or dispersed in a suitable solvent to obtain a coating composition, which is then made into a desired shape. The polymer material thus prepared is used for applications mentioned later. Additives for rubbers and plastics may be added to the polymer substances. Examples of such additives are fillers, reinforcing agents, softening agents, plasticizers, compatibility imparting agents, seed of crystallization, antiaging agents, antioxidants, antiozonants, ultraviolet absorbers, pigments, dyes, tackifier resins and the like.

The article made of the polymer material of the invention is used as deformed to a desired second shape by the hand, a tool or an apparatus such as compression molding machine which is selected according to the shape or wall thickness of the article. The article is deformed at a temperature at which it is easily deformable without developing any crack. Generally, the temperature is preferably not lower than the glass transition point of the polymer substance. When the deformation temperature is not lower than the glass transition temperature, it is desirable to quench the article to below the transition tempertature to fix the deformation.

The article of shape memory polymer material thus prepared can be easily restored to the initial shape or to a shape similar thereto at a temperature not lower than the glass transition point. Usually, the article is heated at a temperature not lower than the glass transition point (50 to 100 °C) of the polymer substance, whereby the deformation is automatically eliminated for the restitution of the shape.

The article of shape memory polymer obtained from the material of the invention can be temporarily deformed and thereafter restored to a predetermined shape. Such articles are useful in the case where the article as prepared in shape is difficult to install, assemble or transport. In this case, the article is made easy to handle by deformation, then installed or assembled, and thereafter restored to the predetermined shape by heating so as to serve the contemplated function. Such articles are further usable primarily for the purpose of causing the article to restore the original state from a deformed state. More specifically, in the former case, the present material is usable as a joint material and sealing material for the joints of pipes, electric wires and the like, inner or outer lamination material for pipes and barlike articles, print material, fixing material, shock absorbing material, etc. In the latter case, the present material is usable for toy members, stationery, teaching materials, ornaments, etc. The material is also usable for fixing members for affected parts for medical treatments, sports protectors, dolls, artificial flowers, molds or patterns, models of heads for wigs, etc. Furthermore, the material can be made into composite materials along with other functional material, piezoelectric material, electrically conductive polymer material or the like for use as temperature sensors.

The invention will be desdribed with reference to the following examples and comparative examples, in which the parts and percentages are by weight.

Fig. 1 is a graph showing the relationship between the temperature and the modulus of elasticity in tension established by the shape memory materials obtained in Example 4 and 5;

Fig. 2 is a diagram showing DSC measurements of the film obtained in Example 14; and

Fig. 3 is a graph showing the relationship between the temperature and the modulus of elasticity in tension established by the film.

Example 1

In MMA having dissolved therein CQ and DM AEMA each in an amount of 0.5wt% was immersed 20g of fluorine-containing polymer (Dai-el® G801, iodine-containing elastic copolymer containing vinylidene fluoride) which was crosslinked by the conventional method to impregnate 10g of the monomer into the polymer. The monomer was polymerized with irradiation of visible ray at room temperature for 10 minutes. The obtained solid high polymer was checked for modulus of elasticity using a Vibron, product of Orientec Co., Ltd., at a temperature elevation speed of 2°C/min. and frequency of 3.5Hz. The results were given in Table 1.

Table 1

| Temp (°C) | Modulus of elasticity (dyne/cm²) |
|---|---|
| -100 | $3.0 \times 10^{10}$ |
| -50 | $2.8 \times 10^{10}$ |
| 0 | $2.25 \times 10^{10}$ |
| 50 | $1.6 \times 10^{10}$ |
| 100 | $2.0 \times 10^{9}$ |
| 150 | $9.3 \times 10^{7}$ |
| 200 | $1.07 \times 10^{8}$ |
| 250 | $1.20 \times 10^{8}$ |

Example 2

In a mixture of 0.98g of MMA and 0.02g of ethylene glycol dimethacrylate (1G) was dissolved 2g of fluorine-containing polymer (Dai-el® G801). Thereto were added CQ and DMAEMA each in an amount of 0.5wt% and the monomers were polymerized with use of visible ray at room temperature for 10 minutes. The characteristics of the obtained solid polymer were shown below.

(1) Tensile strength at break

Measured according to JIS K 6301 using an autograph, product of Shimadzu Seisakusho Ltd., with use of dumbbell specimen (No.2) at a drawing speed of 100mm/min.

The tensile strength at break of the obtained solid polymer substance was 530kgf/cm$^2$.

(2) Shape Memory Test

A solid polymer material was molded into blocks measuring 10×10×5mm. The blocks were compressed in a hot water bath at 95°C to reduce the height by 35%, then placed into water at 20°C to fix the shape, and thereafter immersed in the hot water bath again at 95°C to determine the shape restoring ratio.

$$\text{Restoring ratio} = \frac{T_2 - T_1}{T_0 - T_1} \times 100$$

wherein $T_0$ : height of the sample before deformation
T : height of the sample after deformation
$T_2$ : height of the sample on restitution

| Immersion time (sec) | Restoring ratio (%) |
|---|---|
| 60 | 98 |
| 120 | 99 |

Example 3

Ten gram of MMA containing 2% of 1G was impregnated into 20g of fluorine-containing polymer (Dai-el® G801) which was crosslinked by the conventional method. Thereto were added CQ and DMAEMA each in an amount of 0.5wt% and the monomers were polymerized with use of visible ray at room temperature for 10 minutes.

The obtained solid polymer substance was checked for shape memory characteristics in the same manner as above. The results were given below.

| Immersion time (sec) | Restoring ratio (%) |
|---|---|
| 60 | 100 |
| 120 | 100 |

Example 4

The polymerization was conducted in the same manner as in Example 1 with the exception of using 10g of Dai-el® G801 and 20g of MMA. The obtained solid polymer substance was checked for modulus of elasticity and the results were shown in Table 2.

Example 5

The polymerization was conducted in the same manner as in Example 4 except that 15g of MMA and 5g of 1G were used in place of 20g of MMA. The obtained solid polymer substance was checked for modulus of elasticity and the results were shown in Table 2.

Table 2

| Temp (°C) | Modulus of elasticity (dyne/cm$^2$) | |
|---|---|---|
| | Ex. 4 | Ex. 5 |
| -100 | $3.0 \times 10^{10}$ | $3.4 \times 10^{10}$ |
| -50 | $2.8 \times 10^{10}$ | $2.8 \times 10^{10}$ |
| 0 | $2.8 \times 10^{10}$ | $2.4 \times 10^{10}$ |
| 50 | $1.6 \times 10^{10}$ | $1.75 \times 10^{10}$ |
| 100 | $2.0 \times 10^{9}$ | $6.8 \times 10^{9}$ |
| 150 | $9.7 \times 10^{7}$ | $1.8 \times 10^{9}$ |
| 200 | $1.1 \times 10^{8}$ | $6.0 \times 10^{8}$ |

The results listed in Table 2 are shown in Fig. 1, in which A and B represent the results achieved by the materials of Example 4 and Example 5, respectively. Fig. 1 reveals that these materials exhibit shape memory characteristics at temperatures of not lower than about 50°C.

Example 6

Solutions of Dai-el® G801 and MMA in the proportions (weight ratio) listed in Table 3 were each photopolymerized under the following conditions to obtain a cured product. Namely, to the solution were added CQ and DMAEMA each in an amount of 0.5wt% and the monomer was polymerized with use of visible ray at room temperature for 10 minutes. The number average molecular weight ($\overline{M}n$) of the obtained solid polymer substance was determined by gel permeation chromatography (GPC) using polystyrene as a standard substance.

Table 3

| | G801 | MMA | $\overline{M}n$ |
|---|---|---|---|
| (A) | 66 | 34 | 44000 |
| (B) | 50 | 50 | 42000 |

Example 7

The shape memory characteristics of the composition of Example 6 (A) were evaluated by the following method. The sample was molded into bars, 60×3×1mm. The bars were stretched by 20 to 225% in a hot water bath at 90°C, fixed in ice water, and thereafter immersed in the water bath again at 90°C for 1 to 20 minutes to determine the restoring ratio achieved by varying periods of immersion. Table 4 shows the results.

$$\text{Restoring ratio } (\%) = \frac{L_1 - L_2}{L_1 - L_0} \times 100$$

wherein $L_0$ : length of the sample before stretching
$L_1$ : length of the sample after stretching
$L_2$ : length of the sample after restitution

Table 4

| Stretching ratio (%) | Time (min) | | | | |
|---|---|---|---|---|---|
| | 1 | 2 | 5 | 10 | 20 |
| 20 | 100 | | | | |
| 45 | 100 | | | | |
| 60 | 91.7 | 91.7 | 100 | | |
| 65 | 92.3 | 92.3 | 100 | | |
| 100 | 90.0 | 90.0 | 95.0 | 95.0 | |
| 105 | 90.5 | 90.5 | 95.2 | 95.2 | |
| 225 | 84.4 | 86.7 | 91.1 | 93.3 | 95.6 |

Example 8

In a monomer mixture of 5FMA and EDMA was dissolved a copolymer of tetrafluoroethylene-propylene in the proportion (weight ratio) listed in Table 5 and the monomers were subjected to photopolymerization to obtain a cured product. Namely, to the solution were added CQ and DMAEMA each in an amount of 0.5wt% and the monomers were polymerized with use of visible ray at room temperature for 10 minutes.

Table 5

| Tetrafluoroethylene/propylene (60/40) copolymer | 5 FMA | EDMA |
|---|---|---|
| 60 | 33 | 7 |

Example 9

The shape memory characteristics of the composition were evaluated by the following method. The sample was molded into bars, 60x6x1mm. The bars were stretched by 20 to 50% in a hot water bath at 90°C, fixed in ice water, and thereafter immersed in the water bath again at 90°C for 1 minute to determine the restoring ratio. Table 6 shows the results.

$$\text{Restoring ratio } (\%) = \frac{L_1 - L_2}{L_1 - L_0} \times 100$$

wherein $L_0$ : length of the sample before stretching
$L_1$ : length of the sample after stretching
$L_2$ : length of the sample after restitution

Table 6

| Stretching ratio (%) | Restoring ratio (%) |
|---|---|
| 20 | 100 |
| 50 | 100 |

Example 10

In 5FMA was dissolved a copolymer of tetrafluoroethylene-propylene in the proportion (weight ratio) listed in Table 7 and the monomer was subjected to photopolymerization to obtain a cured product. Namely, to the solution were added CQ and DMAEMA each in an amount of 0.5wt% and the monomer was polymerized with use of visible ray at room temperature for 10 minutes.

Table 7

| Tetrafluoroethylene/propylene (60/40) copolymer | 5 FMA |
|---|---|
| 67 | 33 |

Example 11

The shape memory characteristics of the composition were evaluated by the following method. The sample was molded into bars, 60×6×1mm. The bars were stretched by 15 to 45% in a hot water bath at 90 °C, fixed in ice water, and thereafter immersed in the water bath again at 90 °C for 1 minute to determine the restoring ratio. Table 8 shows the results.

$$\text{Restoring ratio } (\%) = \frac{L_1 - L_2}{L_1 - L_0} \times 100$$

wherein $L_0$ : length of the sample before stretching
$L_1$ : length of the sample after stretching
$L_2$ : length of the sample after restitution

Table 8

| Stretching ratio (%) | Restoring ratio (%) |
|---|---|
| 15 | 100 |
| 45 | 100 |

Example 12

A solution obtained by dissolving 5g of T630 and 5g of PMMA in DMA and stirring the solution for 24 hours was cast to prepare a polymer film, which was cut into 5-mm-wide strips for use as test pieces. The test pieces were stretched in hot water at 90° C, then fixed in ice water, and thereafter immersed in hot water again at 90° C to determine the shape restoring ratio. The results are given in Table 9, T630 is Dai-el Thermo® T630 (thermoplastic elastic copolymer of iodine-containing vinylidene fluoride).

$$\text{Restoring ratio } (\%) = \frac{L_1 - L_2}{L_1 - L_0} \times 100$$

wherein $L_0$ : length of the sample before stretching
$L_1$ : length of the sample after stretching
$L_2$ : length of the sample after restitution

Table 9

| Stretching ratio (%) | Restoring ratio (%) |
|---|---|
| 30 | 100 |
| 50 | 100 |
| 180 | 75 |

Example 13

A copolymer of tetrafluoroethylene/propylene (60/40, mole %) was blended with polymethyl methacrylate (PMMA) in the weight ratio of 1:1, and the blend was molded into solid cylindrical pieces, 10mm in diameter and 9mm in length. The molded pieces were compressed in a hot water bath at 90° C, then fixed in ice water and thereafter immersed in hot water again at 90° C for 1 to 10 minutes to determine the restoring ratio achieved by varying periods of immersion.

$$\text{Restoring ratio } (\%) = \frac{L_2 - L_1}{L_0 - L_1} \times 100$$

wherein $L_0$ : length of the sample before compression
$L_1$ : length of the sample after compression
$L_2$ : length of the sample after restitution

Table 10

| Compression ratio (%) | Time (min) | | |
|---|---|---|---|
| | 1 | 5 | 10 |
| 10 | 100 | | |
| 26 | 66.8 | 86.9 | 87.2 |

Example 14

Polyvinylidene fluoride (5g) and 5g of polymethyl methacrylate were added to 90g of N,N-dimethylacetamide, and the mixture was stirred to prepare a uniform solution, which was then placed into a constant-temperature chamber at 60 °C to remove the solvent. The residue was melted at 200 °C and thereafter quenched to prepare a film having a thickness of 100μm. The properties of the film were determined by the following method.

(1) DSC measurement

The sample, weighing 20.4mg, was tested using Du Pont Instruments 1090 Thermal Analyzer while raising the temperature at a rate of 20 °C/min. Fig. 2 shows the result.

(2) Modulus of elasticity

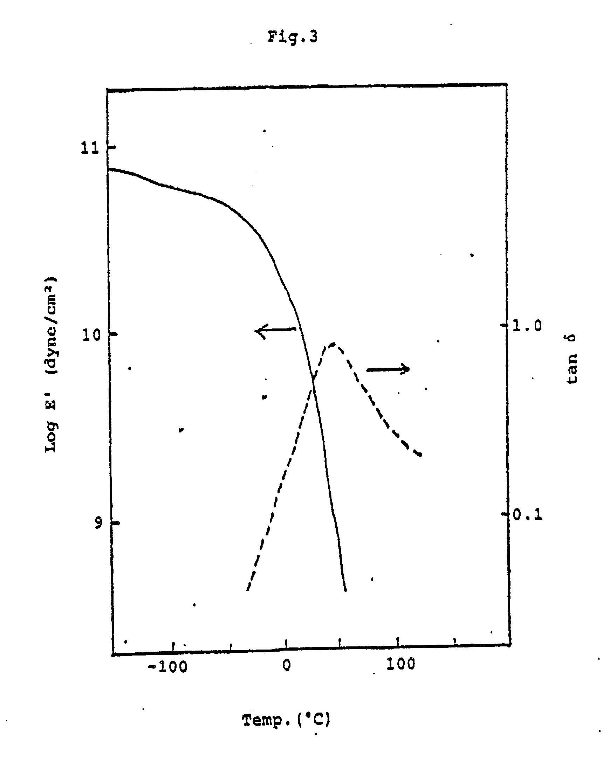

The sample was checked for modulus of elasticity using a Vibron, product of Orientec Co., Ltd., at a temperature elevation speed of 2 °C/min. and frequency of 3.5Hz. The results were given in Table 11 and Fig. 3.

Table 11

| Temp (°C) | Modulus of elasticity ($dyne/cm^2$) |
|---|---|
| -100 | $5.9 \times 10^{10}$ |
| -75 | $5.4 \times 10^{10}$ |
| -50 | $4.6 \times 10^{10}$ |
| -25 | $3.4 \times 10^{10}$ |
| 0 | $1.8 \times 10^{10}$ |
| 25 | $6.3 \times 10^{8}$ |
| 50 | $7.6 \times 10^{8}$ |

Shape Memory Test

The film was checked for shape memory characteristics by the following manner.

The sample was molded into solid cylindrical pieces, 10mm in diameter and 7mm in length. The molded pieces were compressed in a hot water bath at 90 °C, then fixed in ice water and thereafter immersed in hot water again at 90 °C for 1 to 5 minutes to determine the restoring ratio achieved by varying periods of immersion. The results were given in Table 12.

$$\text{Restoring ratio } (\%) = \frac{L_2 - L_1}{L_0 - L_1} \times 100$$

wherein $L_0$ : length of the sample before compression
$L_1$ : length of the sample after compression
$L_2$ : length of the sample after restitution

Table 12

| Compression ratio (%) | Time (min) | | |
|---|---|---|---|
| | 1 | 2 | 5 |
| 5 | 100 | | |
| 13 | 84.7 | 87.6 | 91.4 |

Example 15

In 1g of ethyl methacrylate (EMA) was dissolved 2g of G801. Thereto were added CQ and DMAEMA each in an amount of 0.5wt% and the monomer was polymerized with use of visible ray at room temperature for 10 minutes.

The shape memory characteristics of the cured product were evaluated by the following method. The sample was molded into bars, 60×3×1mm. The bars were stretched by 22 to 227% in a hot water bath at 90°C, fixed in ice water, and thereafter immersed in the water bath again at 90°C for 1 to 20 minutes to determine the restoring ratio achieved by varying periods of immersion. Table 13 shows the results.

Table 13

| Stretching ratio (%) | Time (min) | | | | | |
|---|---|---|---|---|---|---|
| | 1 | 2 | 3 | 5 | 10 | 30 |
| 22 | 77.8 | 100 | | | | |
| 76 | 93.5 | 100 | | | | |
| 145 | 98.3 | 98.8 | 99.0 | 100 | | |
| 227 | 94.6 | 95.6 | 96.8 | 96.8 | 96.8 | 97.8 |

Example 16

In a monomer mixture of 0.5g of MMA and 0.5g of glycidyl methacrylate was dissolved 2g of G801 and the cured product was obtained in the same manner as in Example 15. The shape memory characteristics of the cured product were evaluated similarly and the results were given in Table 14.

Table 14

| Stretching ratio (%) | Time (min) | | | |
|---|---|---|---|---|
| | 1 | 2 | 3 | 5 |
| 32.5 | 100 | | | |
| 85 | 97.1 | 100 | | |
| 120 | 97.9 | 97.9 | 100 | |
| 175 | 95.7 | 98.6 | 98.6 | 100 |

Example 17

In 1g of MMA was dissolved 2g of Dai-el® 912 (vinylidene fluoride/tetrafluoroethylene/hexafluoropropylene copolymer) and the cured product was obtained in the same manner as in Example 15. The shape memory characteristics of the cured product were evaluated similarly and the results were given in Table 15.

Table 15

| Stretching ratio (%) | Time (min) | | | | | |
|---|---|---|---|---|---|---|
| | 1 | 2 | 3 | 5 | 10 | 30 |
| 44 | 100 | | | | | |
| 67 | 96.6 | 96.6 | 100 | | | |
| 123 | 96.2 | 98.1 | 98.1 | 100 | | |
| 179 | 94.8 | 94.8 | 94.8 | 96.1 | 97.4 | 100 |

Example 18

In 8g of MMA was dissolved 12g of a copolymer of vinylidene fluoride and chlorotrifluoroethylene [P-(VdF-CTFE), vinylidene fluoride content : 55 mole %] and the cured product was obtained in the same manner as in Example 15. The shape memory characteristics of the cured product were evaluated similarly and the results were given in Table 16.

Table 16

| Stretching ratio (%) | Time (min) | | | | | |
|---|---|---|---|---|---|---|
| | 1 | 2 | 3 | 5 | 10 | 30 |
| 31 | 97 | 100 | | | | |
| 67 | 92.5 | 98.5 | 98.5 | 100 | | |
| 100 | 90 | 94 | 98 | 99 | 100 | |
| 180 | 90.5 | 93 | 95 | 97 | 99 | 99 |

Example 19

In a monomer mixture of 7.6g of MMA and 0.4g of 1G was dissolved 12g of P(VdF-CTFE) [vinylidene fluoride content : 55 mole%]. Thereto were added 0.8g of TAIC and 0.3g of Perhexa 2.5B in addition to CQ and DMAEMA and the monomers were photopolymerized with use of visible ray at room temperature. The resulting polymer was heated at 160°C for 10 minutes to obtain a cured product. The shape memory characteristics of the cured product were evaluated similarly and the results were given in Table 17.

Example 20

In a monomer mixture of 0.9g of MMA and 0.1g of 1,4-butanediol dimethacrylate (1,4-BuDMA) was dissolved 2g of G801 and the cured product was obtained in the same manner as in Example 15. The shape memory characteristics of the cured product were evaluated similarly and the results were given in

Table 18.

Table 17

| Stretching ratio (%) | Time (min) |
|---|---|
| | 1 |
| 20 | 100 |
| 51 | 100 |
| 115 | 100 |

Table 18

| Stretching ratio (%) | Time (min) | |
|---|---|---|
| | 1 | 2 |
| 32 | 100 | |
| 52 | 100 | |
| 63 | 98.4 | 100 |

Example 21

The shape memory characteristics were evaluated in the same manner as in Example 20 except that neopentyl glycol dimethacrylate was used in place of 1,4-BuDMA. The results were given in Table 19.

Example 22

The shape memory characteristics were evaluated in the same manner as in Example 20 except that triethylene glycol dimethacrylate (3G) was used in place of 1,4-BuDMA. The results were given in Table 20.

Table 19

| Stretching ratio (%) | Time (min) | |
|---|---|---|
| | 1 | 2 |
| 32 | 100 | |
| 58 | 100 | |
| 90 | | 100 |

Table 20

| Stretching ratio (%) | Time (min) | | | |
|---|---|---|---|---|
| | 1 | 2 | 3 | 5 |
| 32 | 100 | | | |
| 62 | 100 | | | |
| 95 | 97.3 | 98.9 | 100 | |
| 130 | 96.2 | 96.9 | 98.5 | 100 |

Example 23

The shape memory characteristics were evaluated in the same manner as in Example 20 except that 1,6-hexanediol dimethacrylate was used in place of 1,4-BuDMA. The results were given in Table 21.

Example 24

The shape memory characteristics were evaluated in the same manner as in Example 20 except that diethylene glycol dimethacrylate (2G) was used in place of 1,4-BuDMA. The results were given in Table 22.

Table 21

| Stretching ratio (%) | Time (min) |
|---|---|
| | 1 |
| 26 | 100 |
| 55 | 100 |

Table 22

| Stretching ratio (%) | Time (min) | | |
|---|---|---|---|
| | 1 | 2 | 3 |
| 35 | 100 | | |
| 60 | 100 | | |
| 90 | 100 | | |
| 115 | 98.3 | 99.1 | 100 |

Weather-resistance Test

To 3g of MMA was dissolved 7g of G801 and the monomer was polymerized in the same manner as in Example 6. The obtained cured polymer was checked for weather-resistance by measuring gloss of a sample after weather-resistance promoting test. Test conditions are given in Table 23.

Test conditions

Eyesuper UV tester [SUV-W13, Iwasaki Electronic Co., Ltd. ]
Lamp illuminance $100mW/cm^2$
Cycle 96hr/time

Table 23

| Kind of test | | Temp | Humidity |
|---|---|---|---|
| Light | 6hr | 63° C | 70% |
| Dew | 5hr | 30° C | 100% |
| Rest | 1hr | 63° C | 70% |

Gloss Test

The sample after the above weather-resistance test was checked for 60° specular gloss with use of a degital variable glossmeter [UGV-5D, product of Suga Test Instruments Co., Ltd. ]. The results were shown in Table 24.

Table 24

| Time (hr) | 0 | 96 | 192 | 288 | 384 |
|---|---|---|---|---|---|
| Gloss | 451.0 | 463.6 | 454.5 | 464.9 | 470.5 |

## Claims

1. A polymer material having shape memory characteristics and characterized in that the material is prepared from a polymer substance obtained by dissolving an amorphous fluorine-containing polymer in an acrylic monomer, and polymerizing the monomer with or without permitting the resulting polymer to form an interpenetrating polymer network.

2. A polymer material having shape memory characteristics and characterized in that the material is prepared from a blend of (a) and (b), (a) being an amorphous fluorine-containing polymer or crystalline polymer containing vinylidene fluoride, and (b) being an acrylic polymer.

3. A polymer material as defined in claim 1 or 2 wherein the amorphous fluorine-containing polymer is copolymer containing vinylidene fluoride, fluoroalkene/olefin copolymer, fluoro(alkyl vinyl ether)/olefin copolymer, fluorosilicon elastomer or fluorophosphazene elastomer.

4. A polymer material as defined in claim 1 wherein the acrylic monomer is mono- or poly-functional acrylic monomer.

5. A polymer material as defined in claim 2 wherein the acrylic polymer is a homopolymer of acrylic monomer or copolymer of acrylic monomer and other copolymerizable monomer.

Fig.1

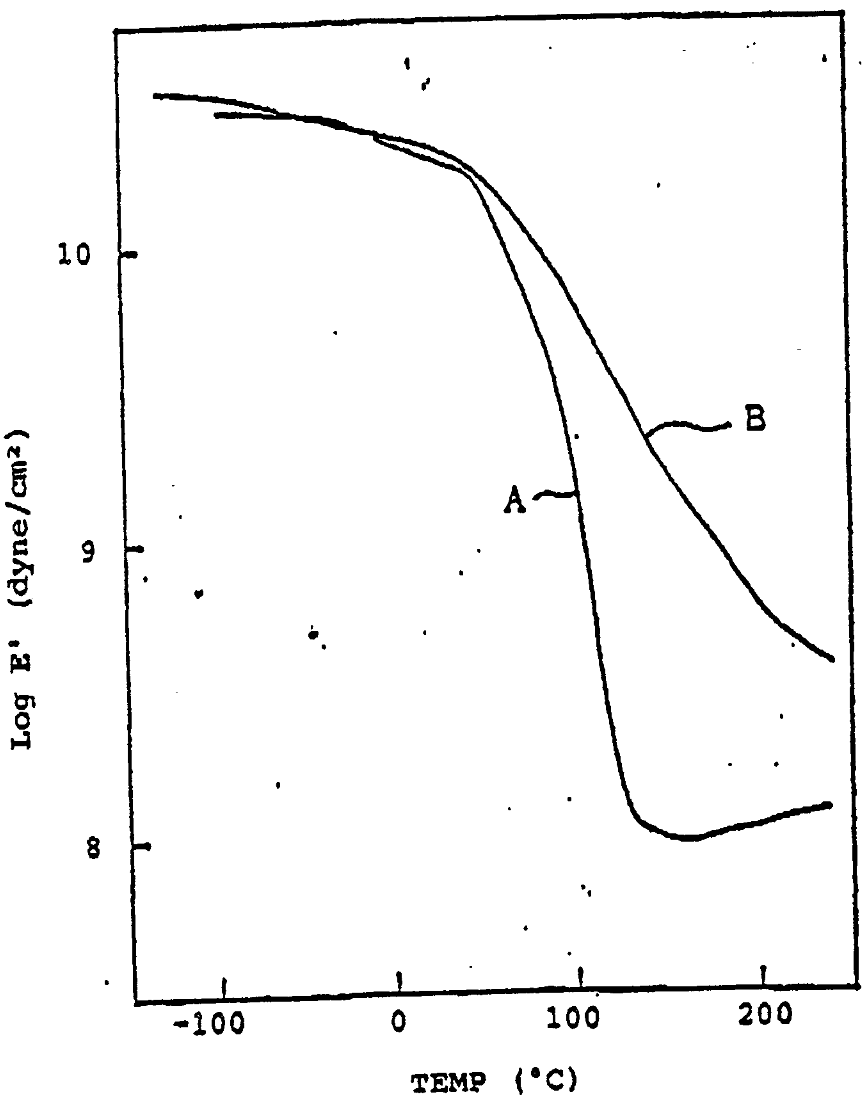

Fig.2

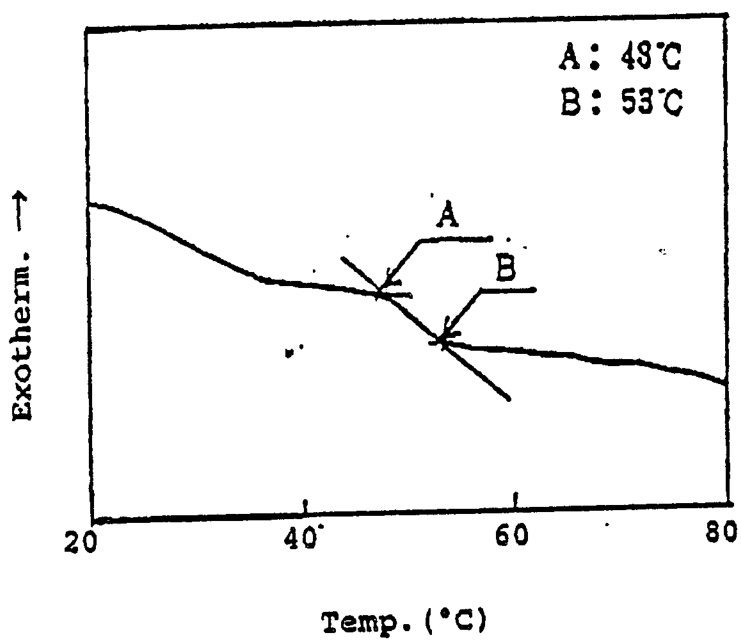

Fig.3